# EUROPEAN PATENT APPLICATION

(11) **EP 1 798 262 A1**
(43) Date of publication of application: **20.06.2007**
(21) Application number: 05292707.6
(22) Date of filing: 15.12.2005
(51) Int. Cl.: C09B 61/00, C09B 63/00, C09B 67/20

(54) **Blue lakes comprising natural dyestuff**

(71) Applicant: Lcw - Les Colorants Wackherr, 95310 Saint-Ouen L'aumone (FR)
(72) Inventor: Grizzo, Serge, 95250 Beauchamp (FR); Seu-Salerno, Martine, 92200 Neuilly-sur-Seine (FR); Desmarthon, Emilie, 95420 Magny-en-Vexin (FR)
(74) Representative: Breese Derambure Majerowicz

(57) **Abstract**

The invention relates to a blue lake comprising an insoluble carrier linked to a natural dyestuff in a weight by weight ratio natural dyestuff/blue lake going from 1:2 to 1:20, and to a process for manufacturing blue lakes comprising natural dyestuff comprising at least the following steps :
- adjusting, in particular decreasing, the pH of a dispersion (D2) comprising at least a solvent, a natural dyestuff and an insoluble carrier, to a value comprised in a range going from 1 to 6, and
- recover the solid particles of blue lakes which are obtained.

## Description

The present invention relates to colouring substances useful for example in the manufacture of food products, cosmetic products and pharmaceutical products. More precisely, the instant invention relates to blue lakes bearing natural colouring substance and to a process to prepare them.

A wide range of colouring substances, synthetic or natural, are commercially available. Among them some can be used in cosmetic, pharmaceutical or food products.

As many consumers want products as natural as possible there is a need for natural colouring substances. The number of natural colouring substances for the blue colour which can be conveniently used in cosmetic, pharmaceutical or food product is limited, especially as such compounds known in the art may have problems such as bleeding, insufficient colouring power, unpleasant odour or taste.

The document EP 1 279 703 discloses blue colouring substances, however they may exhibit low colouring properties for specific applications and/or coarse particle size distribution, which may cause some problems of dispersion.

Consequently, there is still a need for blue lakes comprising natural colouring agent showing improved properties, especially in terms of colouring properties and/or dispersibility.

The inventors discovered that it is possible to obtain blue lakes comprising a natural colouring agent having improved properties.

Following one of its aspects, the subject of the invention is a blue lake comprising an insoluble carrier linked to a natural dyestuff in a weight by weight ratio dyestuff / blue lake going from 1:2 to 1:20. More specifically this ratio may go from 1:4 to 1:15, and even from 1:5 to 1:10.

The blue lakes according to the invention exhibit a blue colour. The blue colour may be measured with a spectrocolorimeter and a maximum in the reflectance curve may be observed between 400 and 520 nm.

The term "dyestuff" as used herein relates to a soluble colouring agent, revealing its colour when dissolved in a solvent,

The term "natural dyestuff" as used herein means a dyestuff which comes from a natural source, specially from animal or vegetal origin, more particularly from vegetal origin.

The term "pigments" as used herein relates to insoluble colouring agents, revealing their colour in the medium in which they are suspended,

The term "lake" as used herein relates to colouring material of pigmentary type, i.e. insoluble, obtained from water-soluble dyestuff adsorbed on an insoluble carrier, in particular with the help of a metallic salt.

The term "linked" as used herein means that there is covalent or non-covalent bond, for example hydrogen bond or hydrophobic interaction.

The blue lake comprises at least one natural dyestuff. In particular, natural dyestuff comprises pure dye content of at least 2% to 99% by weight, relative to the total weight of dyestuff.

Following an embodiment, the dyestuff is a blue dyestuff. More precisely, the dyestuff may have a maximum absorbance in the range of visible wavelength, in particular in a range going from 400 to 600 nm, more particularly in a range going from 420 to 540 nm.

The blue lake may comprise at least one dyestuff which is not a blue dyestuff, also called non-blue dyestuff.

The natural dyestuff may be chosen form the group comprising :
- anthraquinone family dyestuff, like carmine, alizarine,
- anthocyanins, in particular from fruits, more specially from ripe fruits, like strawberry, blackberry, blackberry, black current, cherry, grape and plum, or from vegetables, like red cabbage, black carrot, radish,
- dyestuff from seeds, for example sunflower seeds,
- dyestuff from flowers, like hibiscus, camellia, and perilla, and
- dyestuff like azulene, purple and phycocyanine,
- dyestuff extracted from blue gardenia, brazilwood, logwood, Zi Cao, Coleus, woad, spirulina, and
- mixture thereof.

The carrier may be of natural or synthetic origin. In particular, the carrier is under the form of finely dispersed particles.

The carrier may be chosen from the group comprising :
- mineral material, like barium sulfate, titanium dioxide, zinc oxide, talc, the different varieties of aluminium hydroxide, kaolin, calcium carbonate, magnesium carbonate, or other carbonates, silicas, silicates, hydroxides or oxides from the elements of the IInd, IIIrd and IVth groups from the periodic system,
- organic materials, like cellulose and derivates, starch, polyamides, polymers and resins derived from acrylic acids or esters, like PMMA, or polyurethane, stearic acid salts, micas, aminoacids and derivates, colophanes, aluminium benzoate, latex, alginates, weed extracts, xanthan gum, or any other suitable synthetic polymer under powder form, and
- mixtures thereof.

The carrier may be alumina, more precisely it may result from a reaction between aluminium sulphate or chloride with sodium carbonate or bicarbonate.

The carrier is particles which can be under many different forms, amorphous or crystalline forms. The particles may be under various geometrical forms among which can be cited spherical, cylindrical, acicular or square particles.

The size of the carrier particles may vary a lot, in particular depending on their use. However they may have a mean size going from 0.1 to 100 µm, in particular form 0.5 to 30 µm, and more particularly from 3 to 20 µm.

Following another aspect, a subject matter of the invention is a process for manufacturing blue lakes comprising natural dyestuff comprising at least the following steps :
- adjusting, in particular decreasing, the pH of a dispersion (D2) comprising at least a solvent, a natural dyestuff and an insoluble carrier, to a pH value comprised in a range going from 1 to 6, and
- recover the solid particles of blue lakes which are obtained.

More precisely, the pH of dispersion (D2) may be adjusted to a value comprised in a range going from 2 to 6, and in particular from 3 to 5, 5 being possibly excluded.

The weight ratio insoluble carrier / dyestuff in the dispersion (D2) may vary from 1:4 to 1:10, in particular from 1:5 to 1:8, more particularly from 1:6 to 1:8.

The process may further comprise at least one of, and in particular all, the following steps :
- preparing a dispersion (D1) comprising at least one carrier in a solvent,
- preparing a solution (S1) comprising at least one natural dyestuff in a solvent,
- preparing a dispersion (D2) by adding the solution (S1) to the dispersion (D1),
- preparing an acidic solution (S2), optionally comprising at least one salt and/or one acid, and
- preparing a dispersion (D3) by adding the acidic solution (S2) to dispersion (D2), in particular under stirring.

By definition the dyestuff should be soluble in the solvent of solution (S1). Accordingly, solution (S1) may be an aqueous, alcoholic, hydro-alcoholic or hydro-glycolic solution.

The solution (S1) comprises a ratio of natural dyestuff which can vary from 0.05 to 20 % by weight, in particular from 0.1 to 15 % by weight, and more particularly from 0.5 to 10% by weight relative to the total weight of the solution.

The dispersion (D1) comprises a ratio of carrier which can vary from 0.5 to 20 % by weight, in particular from 1 to 15 % by weight, and more particularly from 1 to 10 % by weight relative to the total weight of the dispersion (D1).

The solution (S2) may comprise a salt or an acid, which can be an organic or inorganic acid, or an inorganic salt. Without being bound by any theory, this substance may help the precipitation of blue lakes, adsorption or complexation of the dyestuff on the carrier.

The acid may be chosen among all the organic and inorganic acid family.

The salt may be chosen from metallic salt. The metal may be chosen from the group comprising aluminium, iron, sodium, potassium, barium, calcium, strontium and zirconium.

The counter ion of the salt may be halide, sulfate or phosphate. The halide may be chosen from fluoride, chloride, bromide and iodide.

More specifically, the salt is a metallic halide, for example iron chloride or aluminium chloride.

The solution (S2) may be an aqueous or hydro-alcoholic solution.

The step of adjusting the pH of the dispersion (D2) may be carried out at a temperature going from 15 to 100°C, more particularly going from 25 to 60°C.

The solid particles of blue lakes recovered at the end of the process can be further purified, for example by one or several washing and drying steps.

The particles of blue lakes can be crushed to get smaller particles, which may facilitate their dispersion.

Following another aspect, a subject matter of the invention is a blue lake obtainable by the here above disclosed process.

According to another aspect, a subject matter of the invention is a composition comprising blue lakes as disclosed above. More specifically the composition may be food, pharmaceutical and/or cosmetic composition.

The composition comprises blue lakes in a ratio which may be going from 0.01 to 60 % by weight, in particular going from 0.05 to 20 % by weight, relative to the total weight of the composition.

The composition may be under various forms, such as dispersions, creams, emulsions, powders, sticks, pencils, mousses among other things specially for cosmetic applications ; pellets, syrups, gels and creams among other things for pharmaceutical applications ; ice-cream and confectionery, coating and decoration applications among other things for food applications.

The following examples serve to illustrate the invention without limiting the scope thereof.

### Examples :

### Example 1 : Blue lake with anthraquinone dyestuff

An aqueous solution comprising 2 % w/w of alizarin dyestuff is slowly poured under stirring in an aqueous dispersion of a 10 % w/w seaweed extract powder (algae extract). Then an aqueous solution comprising 10 % w/w of iron (III) chloride is slowly added.

After stirring one hour at room temperature (ca 25°C) the particles suspension is filtered by a press filter, washed with tapwater, dried in an oven at 60°C overnight, and then finely crushed to obtain fine particles of blue lakes.

### Example 2 : Blue lake with anthocyanin dyestuff

An aqueous solution of a 5 % w/w of anthocyanin dyestuff from black carrots extract is slowly poured under stirring in an aqueous gel of alumina hydrate (comprising aluminium sulfate and sodium carbonate). Then a dilute aqueous solution of aluminium chloride is slowly added to the dispersion comprising the alumina and the anthocyanin in order to adjust the pH at 4 ± 1.

After stirring one hour the suspension is filtered by a press filter, washed with tapwater, dried in an oven at 60°C overnight, and then finely crushed to obtain fine particles of blue lakes.

### Example 3 : Eyeshadow comprising blue lakes

| % w/w | | |
|---|---|---|
| A | Macadamia oil | 43.00 |
| | Synthetic beeswax | 1.90 |
| | Macadamia wax | 2.85 |
| | Hydrogenated coconut oil | 5.70 |
| B | **Blue lakes from Example 1 or Example 2** | 9.50 |
| C | Mica | 8.55 |
| | Corn starch | 14.25 |
| | Talc | 9.50 |
| | Mica (and) Titanium dioxide | 4.75 |

Heat Phase A at 80°C. Grind Blue Lake in macadamia oil. Add the paste to Phase A. Then add Phase C.

### Example 4 : Mascara comprising blue lakes

| % w/w | | |
|---|---|---|
| A | Macadamia oil | 5.00 |
| | Candellila wax | 1.00 |
| | Carnauba wax | 1.00 |
| | Synthetic beeswax | 10.00 |
| | Stearic acid | 3.00 |
| B | Sodium hydroxide | 0.50 |
| C | Algae extract | 1.00 |
| | Salicylic acid | 0.30 |
| | Pure water | 63.70 |
| D | **Blue lake from Example 1 or Example 2** | 12.50 |
| E | Corn starch | 2.00 |

Heat Phase A at 80°C and Phase B at 50°C. Add Phase B to Phase A, then add Phase C under stirring. Add the grounded Phase D and then Phase E.

### Example 5 : Cream in powder form comprising blue lakes

| % w/w | | |
|---|---|---|
| A | Sodium carboxy methyl starch | 3.80 |
| | Talc (and) dimethicone (and) trimethylsiloxysilicate | 3.30 |
| | Mica (and) dimethicone (and) trimethylsiloxysilicate | 2.40 |
| | Talc (and) C9-13 fluoroalcohol | 3.80 |
| | Methylmethacrylate cross polymer | 2.40 |
| | Titanium dioxide (and) trimethoxycaprylylsilane | 3.30 |
| | **Blue lakes from Example 1 or Example 2** (and) triethoxycaprylylsilane | 10.00 |
| B | Pure water | 62.05 |
| | Monopropylene glycol | 1.00 |
| | Preservative | 0.45 |
| | Algae extract (and) sorbitol | 1.90 |
| | PEG-8 | 5.60 |

The components of Phase A are mixed together. Pour Phase B in Phase A under stirring until obtaining a blue cream in powder.

### Example 6 : Compact powder comprising blue lakes

| % w/w | |
|---|---|
| Talc (and) magnesium myristate | 82.00 |
| Zinc stearate | 9.20 |
| **Blue lakes from Example 1 or Example 2** | 8.80 |

The components are mixed together and compacted in order to obtain a blue compact powder.

### Example 7 : Ice-cream comprising blue lakes

| % w/w | |
|---|---|
| Saccharose | 10,00 |
| skimmed milk powder | 4,00 |
| stabilizer | 0.50 |
| skimmed milk | 45,80 |
| cream | 33,50 |
| glucose syrup | 6,00 |
| **Blue lakes from Example 2** | 0.20 |

The dry components are mixed; milk, cream and glucose syrup are added. Stirring one hour for swelling. Heating up to 85°C and cooling down, adding colour. Afterwards the mass is frozen in an ice machine and cooled down to approx. -18°C in a freezer.

### Example 8 : Dragees comprising blue lakes

Syrup (1 000 g) (brix approx. 74-76°) is prepared. Then **blue lakes from Example 2** (10 g) are added and dispersed homogeneously by using an Ultra-Turrax. The coloured syrup (1010 g) is then added to the sweets (8 990 g).

### Example 9 : Fat coating comprising blue lakes

Fat coating (1 000 g) decoration is heated up to approx. 37-40°C until it is liquid. **Blue lakes from Example 2** (1 g) are added and distributed homogeneously by stirring.

### Example 10 : Chocolate comprising blue lakes

Chocolate (1 000 g) decoration is heated up to approx. 37-40°C until it is liquid. **Blue lake from Example 2** (1 g) are added and distributed homogeneously by stirring.

## Claims

1. Blue lake comprising an insoluble carrier linked to a natural dyestuff in a weight by weight ratio natural dyestuff/blue lake going from 1:2 to 1:20, in particular from 1:4 to 1:15, and especially from 1:5 to 1:10.

2. Blue lake according to claim 1, **characterized in that** the natural dyestuff is chosen in the group comprising anthraquinones, anthocyanins, dyestuff from seeds, dyestuff from flowers, azulenes, purple, phycocyanines, dyestuff extracted from blue gardenia, brazilwood, logwood, Zi Cao, Coleus, pastel, spirulina, and mixtures thereof.

3. Blue lake according to claim 1 or 2, **characterized in that** the dyestuff presents a pure dye content going from 2% to 99% by weight, relative to the total weight of dyestuff.

4. Blue lake according to any of claims 1 to 3, **characterized in that** the carrier is chosen from mineral materials, organic materials and mixture thereof, in particular the carrier comprises alumina.

5. Process for manufacturing blue lakes comprising natural dyestuff comprising at least the following steps :
- adjusting, in particular decreasing, the pH of a dispersion (D2) comprising at least a solvent, a natural dyestuff and an insoluble carrier, to a value comprised in a range going from 1 to 6, and
- recover the solid particles of blue lakes which are obtained.

6. Process according to claim 5, **characterized in that** it further comprises at least one of the following steps :
- preparing a dispersion (D1) comprising at least one carrier in a solvent,
- preparing a solution (S1) comprising at least one natural dyestuff in a solvent,
- preparing a dispersion (D2) by adding the solution (S1) to the dispersion (D1),
- preparing an acidic solution (S2) comprising at least one salt and/or one acid, and
- preparing a dispersion (D3) by adding the acidic solution (S2) to dispersion (D2), in particular under stirring.

7. Process according to claim 5 or 6, **characterized in that** the pH is adjusted to a value comprised in a range going from from 2 to 6, in particular from 3 to 5.

8. Process according to any of claims 5 to 7, **characterized in that** the weight ratio insoluble carrier / dyestuff in the dispersion (D2) is going from 1:4 to 1:10, in particular from 1:5 to 1:8, more particularly from 1:6 to 1:8.

9. Blue lake obtainable by a process according to any of claims 5 to 8.

10. Composition comprising blue lakes according to any of claims 1 to 4 and 9.
